# EUROPEAN PATENT SPECIFICATION

(11) **EP 2 412 647 B1**
(45) Date of publication and mention of the grant of the patent: **09.09.2015**
(21) Application number: 10007749.4
(22) Date of filing: 26.07.2010
(51) Int. Cl.: B65D 90/52, B60P 3/22, B60K 15/03, B60K 15/077

(54) **Tank container with a surge baffle arrangement**
Tankbehälter mit einer Schwallwandanordnung
Réservoir muni d'un dispositif anti-ballottement

(43) Date of publication of application: 01.02.2012
(73) Proprietor: Welfit Oddy (Pty) Limited, Port Elizabeth 6001 (ZA)
(72) Inventor: McLaren, Timothy, Neil, Port Elizabeth 6001 (ZA); Rigby, Sydney, Vernon, Port Elizabeth 6001 (ZA); Vosloo, Benjamin, Andries, Port Elizabeth 6001 (ZA)
(74) Representative: MFG Patentanwälte Meyer-Wildhagen Meggle-Freund Gerhard PartG mbB

(56) References cited:
- EP-A1- 2 058 245
- CN-Y- 201 317 553
- FR-A- 1 575 773
- US-A1- 2004 007 272

## Description

The present invention relates to a surge baffle arrangement for tank containers featuring, arranged transversely to the longitudinal axis of the tank, surge baffle elements crossing the tank interior and joined to the tank shell defining the tank interior.

Known for example from European patent EP-A 2 058 245 or French patent FR-A 1 483 776 are such surge baffle arrangements of surge baffle elements structured from more or less flat or curved circular segments between which a vertical approximately rectangular or trapezoidal gap runs full-length through the tank interior. These surge baffle elements are engineered double-shelled or at least the edges defining the gap are configured as a tubular section to achieve the necessary stability.

Also popular are surge baffle arrangements incorporating disk elements engineered with openings which - except for the openings - fully cover the cross-section of the tank (see also EP-A 2 058 245).

Surge baffle arrangements are needed in tank containers and other transport vessels for shipping liquid cargos partly filled in which they serve to prevent, or considerably reduce, surging of the liquid cargo during sudden braking or acceleration of the tank during transport. For this purpose they typically cover from 40% to 70% of the cross-section of the tank interior which may be configured right-circular cylindrical, elliptical or box-shaped or even rectangular, the ends of which are closed off as a rule by dished or flat heads.

Known from WO 2005/002993 A1 are surge baffle elements engineered as flat strips joined to the tank shell by reinforcing L sections and further intermediate elements. Also known are arrangements in which flexible strips criss-cross the tank interior in thus forming a flexible surge baffle or surge baffle arrangement.

CN 201 317 553Y shows an impingement baffle with a trapezoid concave convex cross section in a continuous waving mode which is arranged vertically in the middle of a tank. Such an arrangement may be difficult be passed by a person during inspection and prevents complete draining in the bottom area of the tank.

All of these known surge baffle arrangements are complicated structures often involving cavities within the tank interior which are difficult to inspect. This is particularly unwanted when the bulk being transported is hazardous. There is thus a need to provide an improved surge baffle arrangement capable of solving the above problems at least in part.

This object is achieved by the surge baffle arrangement as set forth in claim 1 incorporating surge baffle elements engineered as flat longitudinally profiled elements oriented vertical in the profile direction and comprising free inner and outer side edges in the profile direction, the longitudinal profile being oriented vertical along a main plane passing through the tank interior. The free inner side edges facing each other of two adjacent surge baffle elements thus define a gap facilitating both cleaning and servicing a vessel engineered as such. Disposed between the free outer side edges and the side tank shell is a passage communicating the portions separated from each other by the baffle arrangement even when the tank container has toppled over, i.e. lying on its side. At the same time these passages reduce the contoured joining portion conforming to the tank cross-section at the top and bottom end of the surge baffle elements and facilitate installing the arrangement in a curved tank interior. The profiling also safeguards high dimensional stability opposing surging despite the slender design of the surge baffle element without the need for closed cavities in the tank interior which would be difficult to inspect and without the need for additional reinforcement.

Arranging the surge baffle elements in two main planes each different from the other , for one thing, further enhances the dimensional stability and, for another, combats the tendency to a transverse surge due to transverse acceleration forces (in vehicle cornering). It has been discovered that the angles of inclination as set forth in claim 2 are also of advantage in improving the cleaning effect.

When, as set forth in claims 3 and 4, the inner edges are inclined, this improves the spatial relationships by simplifying access between two surge baffle elements, especially when the width of the gap in the vertical direction is flared, i.e. V-shaped from bottom to top due to the inclination of the inner side edges, in enabling a manhole or cleaning opening or some other port to be located between the surge baffle elements of a surge baffle arrangement. It is particularly when the cleaning openings feature spray or flushing heads in the upper portion of the interior of the tank container that this arrangement now considerably extends the spray range in the upper expansive portion of the gap which is otherwise shadowed by the close combination of surge baffle elements, now making for improved cleaning efficiency. Between 40% and 70% coverage of the tank cross-section reliably combats any surge tendency, no matter how full the vessel is.

Claims 6 and 7 relate to how the surge baffle elements are profiled, enabling use to be made of conventional sections as are popular and readily available. Securing the surge baffle elements to the tank shell via intermediate elements has special advantages in fabrication since this now promotes tolerance-friendly overlapping of the surge baffle elements and intermediate elements, in enabling diverse materials to be joined together. Thus, the tank itself and the intermediate element welded thereto, for example, can be made of stainless steel whilst the surge baffle elements can be made of a lighter material such as e.g. aluminum or some suitable plastics material, this simultaneously decreases stresses being directed into the shell of the tank in reducing the risk of the system being overstressed.

Claim 9 relates to suitable configurations of such intermediate elements.

Claims 10 and 11 relate to tank containers featuring the surge baffle arrangements in accordance with the invention which now expedite cleaning by reducing the number of cleaning openings needed in thus facilitating the cleaning process by making fewer connections necessary in saving time and money without sacrificing a good cleaning result.

Examples of the present invention will now be detailed with reference to the drawings in which:
- FIG. 1: is a view in perspective of several surge baffle arrangements in accordance with the invention as installed in the vessel of a tank container,
- FIG. 2: is a top-down diagrammatic view of the surge baffle arrangements as shown in FIG. 1 with the spray zones indicated dot-dashed,
- FIG. 3: is a detail taken from FIG. 1 (Detail A),
- FIG. 4: is a cross-sectional view (section B-B in Fig. 2) of the vessel including a surge baffle arrangement,
- FIG. 5: is a section view through a profiled plate (section C-C in Fig. 4),
- FIG. 5a: shows alternative embodiments of detail C in Fig. 5, and
- FIG. 6: shows a detail of an alternative surge baffle arrangement.

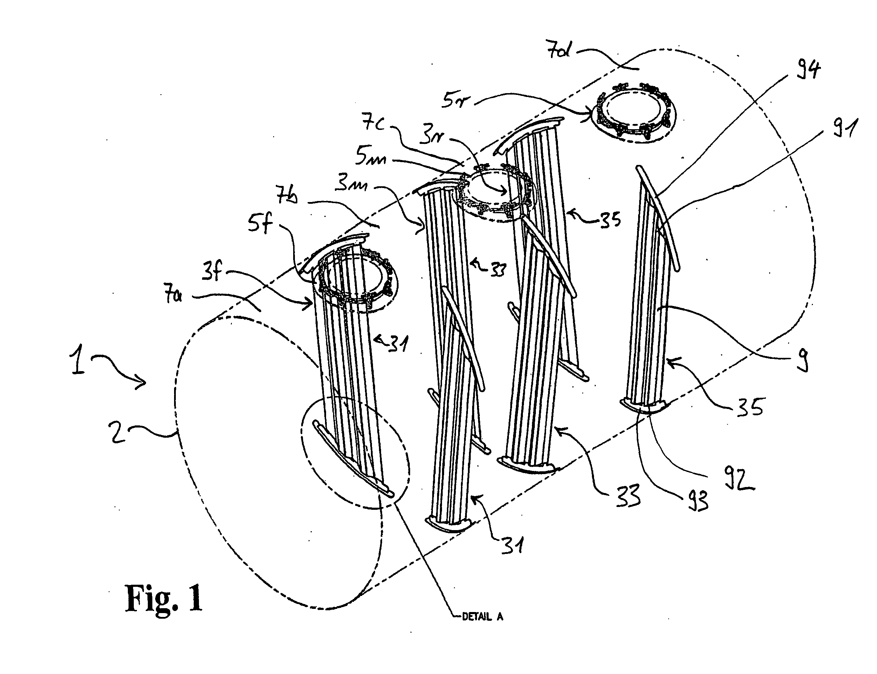

Referring now to FIG. 1 there is illustrated a diagrammatic view in perspective of a vessel 1 (indicated dot-dashed) comprising three surge baffle arrangements (3) sited front (3f), middle (3m) and rear (3r) in the region of three manholes (5) likewise sited front (5f), middle (5m) and rear (5r). The surge baffle arrangements 3f, m and r divide the tank interior 7 into four zones 7a, b, c, d.

The surge baffle arrangements 3f, m, r are each formed of a pair of surge baffle elements 31, 33 and 35, each of which is made of a profiled plate 9 cut at top 91 and bottom 92 to comply with the contour of the tubular shell 2 of the vessel 1. The profiled plates 9 are joined to the shell 2 via intermediate elements 93 and 94 configured as T-sections.

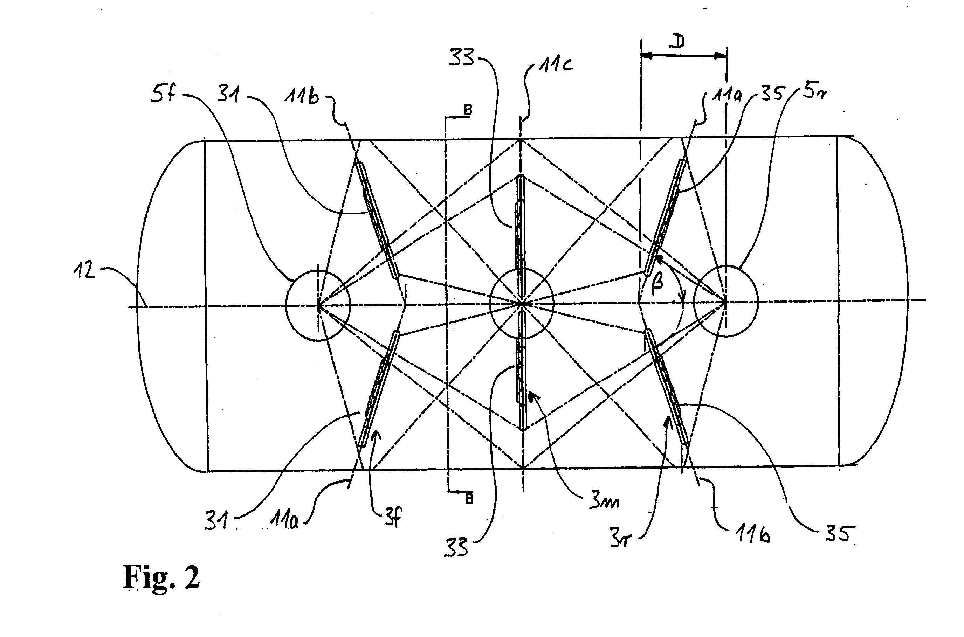

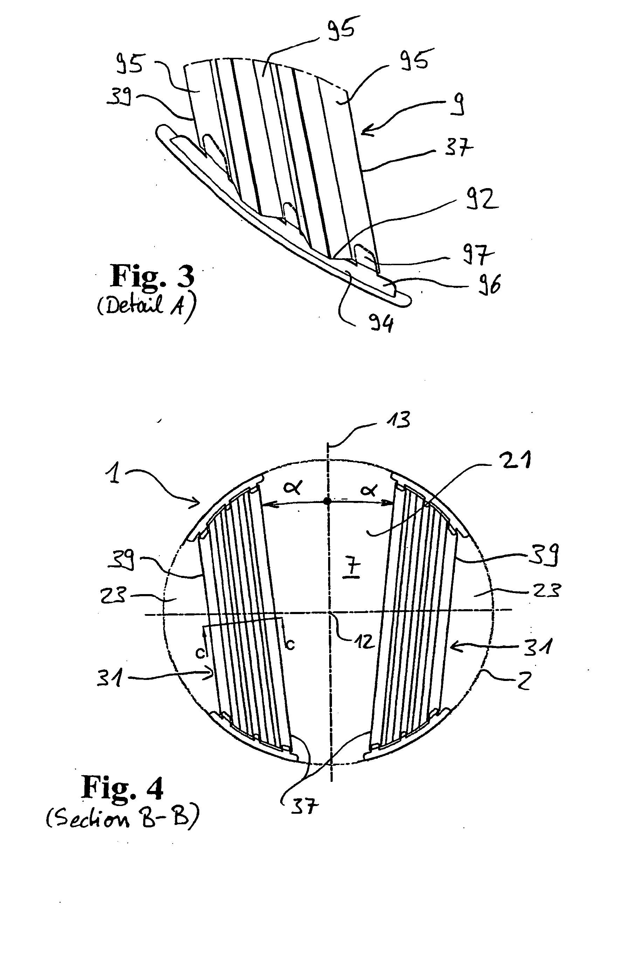

The intermediate elements 93 and 94 are, for example, welded to the shell 2 and the top and bottom ends 91 and 92 of the profiled plate 9 are either welded with a few legs 95 oriented along one of the main planes 11, 11a,11b (Fig. 2) to tongues 97 configured at the web 96 of the intermediate elements 93, 94 (Fig. 3) or releasably bolted thereto (not shown) in which case the bolts pass through the inwardly facing tongues 97 of the lower and upper intermediate elements 93 and 94 as well as the corresponding legs 95 of the profiled plates 9.

The use of the intermediate elements 93, 94 also allow for straight edged ends 91, 92 of the profiled plates 9 which are easier to fabricate then curved edges exactly following the contour of the shell 2.

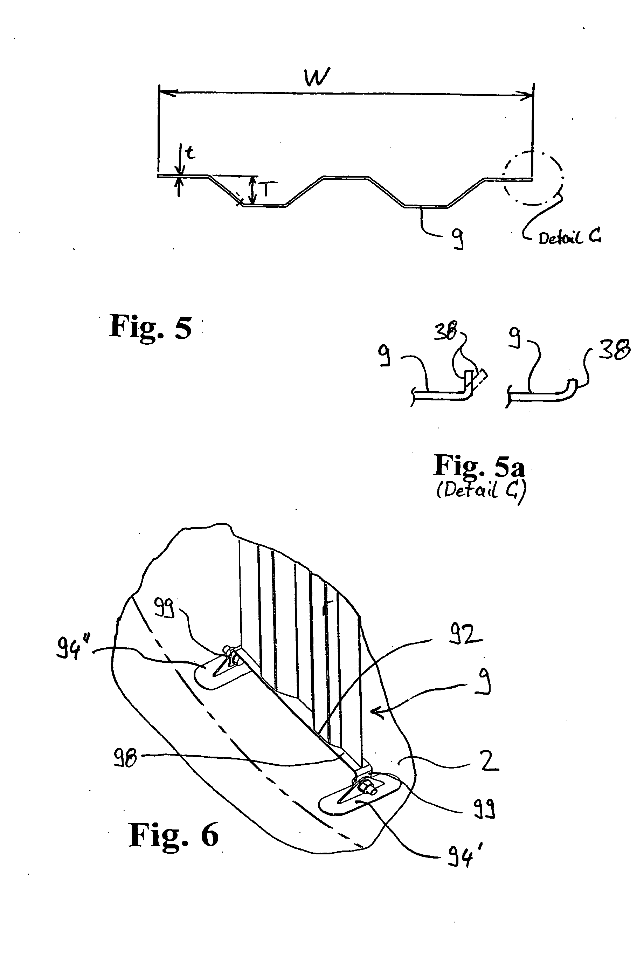

Fig. 6 shows an alternative arrangement of the interface between the surge baffle elements 31, 33, 35 and the tank shell 2. Along the top (not shown) and bottom ends 92 of the profiled plates 9 flat strips 98 are connected which carry bended legs 99 at their respective inner and outer ends. Each leg 99 is releasably bolted to an inner and outer top (not shown) and bottom intermediate elements 94', 94". The intermediate elements 94' and 94" are made from straight tee bar sections which extend along the tank axis 12 and which are fixed (e.g. welded) to the tank shell 2. The web of the tee bar section conforming to the tank shell 2 decreases local stresses in the tank shell 2 caused by surge loads acting upon the surge baffle elements 31, 33, 35 during transport. The intermediate elements 94', 94" can also be made from differently shaped profiles (e.g. L profiles) or from a patch fixed (e.g. welded) to the tank shell 2 with a leg fixed to the patch. In other embodiments (not shown) the legs 99 may be welded either to the intermediate elements 99', 91" or directly to the tank shell 2. The legs may also be formed in one piece from the profiled plate 9.

The front and rear surge baffle elements 31, and 35 are each oriented in main planes 11a and 11b inclined towards each other whose vertical oriented section lines are sited in a distance D away from the middle point of the manlid openings 5f and 5r, resulting in the surge baffle arrangements 3f and 3r being oriented vee-flared to the manlid openings 5f and 5r. The surge baffle elements 33 of the middle surge baffle arrangement 3m are oriented in a main plane 11c passing through the middle point of the manlid opening 5m, and perpendicular to the longitudinal axis 12 of the tank.

Referring now to FIG. 4 there is illustrated how, at the same time, the surge baffle elements 31 (and also 33, 35) are sited inclined to a vertical plane 13 passing through the longitudinal axis 12 of the tank so that the free inner side edges 37 of the surge baffle elements 31, 33, 35 each form a roughly trapezoidal gap 21 flared upwards to comply at least with the diameter of the manlid openings 5f, m, r. The angle α to this plane ranging from 4° to 8°, preferably 5° to 7° is indicated as 6° in this example as shown.

The free outer side edges 39 of the surge baffle elements 31, 33 and 35 each define a passage 23 between the zones 7a, b, c and d of the tank interior 7 in flanking portions of the shell 2. For reinforcement the free inner and outer side edges 37, 39 may also feature a side edge portion 38 inclined (e.g. edged) or curved to the main plane to further enhance the dimensional stability. Alternative embodiments of such a side edge portion 38 are shown in Fig. 5a.

The angles β (Fig. 2) of the main planes 11a and 11b to the longitudinal axis 12 of the tank ranging from 65° to 75° is indicated as 70° in this example as shown. Therefore the inclination angle of the main planes 11a and 11b to each other is 130° to 150°, preferably 135° to 145°.

The distance D (Fig. 2) to the middle point of the manlid openings 5f and 5r is within the range of the surge baffle width W (Fig. 5). The ratio of profile depth (T) to surge baffle width (W) ranging from 1:8 to 1:14 is 1:11.5 in this example as shown. The thickness of the plate from which the profiled plate is made ranges from 1/15 to 1/5 of depth T is 1/13 in this example, the dimensions of the surge baffle elements 31, 33, 35 are selected so that the surface areas projected on a cross-section through the tank cover between 40% to 70% of the cross-sectional surface area of the tank.

Referring now to FIG. 2 there is illustrated defined dot-dashed the spray cone zones of spray or flushing nozzles (not shown) leading through the manlid openings 5f, 5m and 5r into the tank interior 7 (in the upper portion thereof) for wetting on all sides the shell portions of the tank interior facing them and the surfaces of the surge baffle arrangements 3f, m and r. Likewise evident from FIG. 2 is how all surface areas of the shell 2 and of the surge baffle arrangements 3f, m and r are fully wetted and therefore also cleaned with just three nozzles. In this arrangement each of the portions shadowed from the rear and front spray nozzle by the surge baffle arrangements 3f, m and r are covered by the middle spray nozzle whilst the portions shadowed from the middle spray nozzle are covered by the front and rear spray nozzle.

In other aspects (not shown) the profiled plate 9 may also be configured, for example, corrugated wavey or oblong, it also being possible to configure the intermediate elements 93 and 94 as longitudinally profiled or top hat sections instead of tee sections. Likewise possible is to join the ends 91 and 92 of the profiled plate 9 full-length with the intermediate elements 93 and 94 (e.g. by a weld) or to couple them directly to the tank shell 2. In addition to this, the vessel 1 shown right-circular cylindrical may also be configured with an oval elliptic box-shaped or other cross-section.

### List of Reference Numerals

- 1: vessel
- 2: tank shell
- 3: surge baffle arrangement

- f: front
- m: middle
- r: rear

- 5: manlid opening

- 7: tank interior

- 9: profiled plate
- 91: top end
- 92: bottom end
- 93: top intermediate elements
- 94; 94', 94": bottom intermediate elements
- 95: leg
- 96: web
- 97: tongue
- 98: flat strip
- 99: bended legs

- 11: main plane
- 11a: inclined main plane
- 11b: inclined main plane
- 11c: main plane

- 12: tank longitudinal axis
- 13: vertical plane
- 21: gap

- 23: passage

- 31, 33, 35: surge baffle elements, front middle, rear

- 37: free inner side edges
- 38: side edge portion
- 39: free outer side edges

## Claims

1. Tank container with a surge baffle arrangement (3f, m, r) comprising, arranged transversely to a longitudinal axis (12) of a vessel (1) of the tank container, two surge baffle elements (31, 33, 35) each being arranged in a main plane (11a, b, c) passing through the tank interior and interspercing the tank interior and joined by their ends (91, 92) to a tank shell (2) defining the tank interior (7), wherein each surge baffle element (31, 33, 35) is engineered as a flat longitudinally profiled element oriented vertical in the profile direction and comprising a free inner side edge (37) and a free outer side edge (39) in the profile direction,
the free inner side edges (37) of the surge baffle elements (31, 33, 35) are facing each other and define a gap (21) in between for facilitating both cleaning and servicing, **characterised in that** a passage (23) is disposed between each free outer side edge (39) and the tank side shell,
and the surge baffle elements (31, 35) are arranged in two main planes (11a, b) inclined towards each other.

2. Tank container as set forth in claim 1 wherein the inclination of the planes (11a, b) to each other range from 130° to 150°, preferably from 135° to 145°.

3. Tank container as set forth in any of the claims 1 or 2 wherein the inclination of the free inner side edges (37) to a vertical plane (13) interspercing the tank interior (2) in the longitudinal direction (12) of the tank ranges from 4° to 8°, preferably from 5° to 7° in defining a roughly trapezoidal vertical gap (21).

4. Tank container as set forth in any of the claims 1 to 3 wherein a side edge portion (38) of the surge baffle element oriented full-length at the free inner and/or outer side edges (37, 39) is configured inclined to the main plane (11a, b, c) for enhanced structural stability.

5. Tank container as set forth in any of the preceding claims wherein the surface area of the surge baffle elements (31, 33, 35) projected on a tank cross-section ranges from between 40 % to 70 % of the tank cross-sectional surface area.

6. Tank container as set forth in any of the preceding claims wherein the ratio of profile depth (T) to width (W) of the surge baffle elements (31, 33, 35) ranges from 1:8 to 1:14, preferably 1:10 to 1:12.

7. Tank container as set forth in any of the preceding claims wherein the surge baffle elements (31, 33, 35) are configured as trapezoidal or wavey or oblong corrugated profile elements.

8. Tank container as set forth in any of the preceding claims wherein the surge baffle elements (31, 33, 35) are joined by intermediate elements (93, 94; 94', 94") to the tank shell (2), conforming thereto.

9. Tank container as set forth in claim 8 wherein the intermediate elements (93, 94; 94', 94") are configured as web, tee, longitudinally profiled or top hat sections.

10. Tank container as set forth in any of the preceding claims wherein the surge baffle arrangement (3f, m, r) is arranged in the region of a top opening (5f, m, r) of the tank container.

11. Tank container as set forth in claim 10 featuring three top openings (5f, m, r) wherein a middle surge baffle arrangement (3m) comprises surge baffle elements (33) in a cross-sectional plane (11c) passing through the middle point of a middle tank opening (5m), and the surge baffle elements (31, 35) of a front and rear surge baffle arrangement (3f, 3r) respectively are each oriented in planes (11a, b) inclined to each other, the vertical section lines of which are oriented at a distance (D) away from the middle point of the corresponding tank openings (5f, r) to the middle tank opening (5m) which is within the range of a surge baffle element width (W) so that all surge baffle elements and tank shell portions can be wetted by spray heads arranged in the tank openings (5f, m, r).

## Patentansprüche

1. Tankcontainer mit einer Schwallwandanordnung (3f, m, r) aufweisend, quer zu einer Längsachse (12) eines Tanks (1) des Tankcontainers angeordnet, zwei Schwallwandelemente (31, 33, 35), deren jede in einer das Tankinnere durchsetzenden Hauptebene (11a, b, c) angeordnet ist und den Tankinnenraum durchsetzt und an ihren Enden (91, 92) mit einer einen den Tankinnenraum (7) definierenden Tankwand (2) verbunden ist, wobei jedes Schwallwandelement (31, 33, 35) als ebenes, längsprofiliertes, in Profilrichtung vertikal verlaufendes Element ausgebildet ist und eine freie innere Seitenkante (37) und eine freie äußere Seitenkante (39) aufweist, die jeweils in Profilrichtung verlaufen,
die freien inneren Seitenkanten (37) des Schwallwandelements (31, 33, 35) einander zugewandt sind und eine Lücke (21) dazwischen definieren, um sowohl die Reinigung als auch die Wartung zu erleichtern, **dadurch gekennzeichnet, dass** eine Passage (23) zwischen jeder freien äußeren Kante (39) und der Tankseitenwand verläuft, und die Schwallwandelemente (31, 35) in zwei Hauptebenen (11 a, b) angeordnet sind, die zueinander geneigt sind.

2. Tankcontainer nach Anspruch 1, bei welcher die Neigung der Ebenen (11a, b) zueinander in einem Bereich zwischen 130° und 150°, vorzugsweise in einem Bereich zwischen 135° und 145° liegt.

3. Tankcontainer nach Anspruch 1 oder 2, bei welcher die inneren Seitenkanten (37) zu einer den Tanhinnenraum (2) in Längsrichtung (12) durchsetzenden Vertikalebene (13) eine Neigung von 4° bis 8°, vorzugsweise von 5° bis 7° aufweisen, und einen etwa trapezförmigen Vertikalspalt (21) definieren.

4. Tankcontainer nach einem der Ansprüche 1 bis 3, bei welchem für eine erhöhte strukturelle Stabilität ein Seitenkantenbereich (38) des Schwallwandelementes an der freien inneren und/oder äußeren Seitenkante (37, 39) über deren gesamte Länge zur Hauptebene (11a, b, c) geneigt ausgebildet ist.

5. Tankcontainer nach einem der vorhergehenden Ansprüche, bei welcher die auf einen Tankquerschnitt projizierte Fläche der Schwallwandelemente (31, 33, 35) einen Bereich zwischen 40% bis 70% der Tankquerschnittsfläche einnimmt.

6. Tankcontainer nach einem der vorhergehenden Ansprüche, bei welchem die Profiltiefe (T) zur Breite (W) der Schwallwandelemente (31, 33, 35) in einem Verhältnis von 1:8 bis 1:14, vorzugsweise in einem Verhältnis von 1:10 bis 1:12 steht.

7. Tankcontainer nach einem der vorhergehenden Ansprüche, bei welcher die Schwallwandelemente (31, 33, 35) als Trapez-, Well- oder Rechteckprofilelemente ausgebildet sind.

8. Tankcontainer nach einem der vorhergehenden Ansprüche, bei welchem die Schwallwandelemente (31, 33, 35) über der Tankwand (2) folgende Zwischenelemente (93, 94; 94', 94") mit dieser verbunden sind.

9. Tankcontainer nach Anspruch 8, bei welcher die Zwischenelemente (93, 94; 94', 94") aus Steg-, T-, L- oder Hutprofilen ausgebildet sind.

10. Tankcontainer nach einem der vorhergehenden Ansprüche, bei welchem die Schwallwandanordnung (3f, m, r) im Bereich einer Scheitelöffnung (5f, m, r) des Tankcontainers angeordnet ist.

11. Tankcontainer nach Anspruch 11, mit drei Scheitelöffnungen (5f, m, r) wobei eine mittlere Schwallwandanordnung (3m) Schwallwandelemente (33) in einer durch den Mittelpunkt einer mittleren Tanköffnung (5m) verlaufenden Querschnittsebene (11c) aufweist, und die Schwallwandelemente (31, 35) einer vorderen und hinteren Schwallwandanordnung (3f, 3r) jeweils in zueinander geneigten Ebenen (11a, b) verlaufen, deren vertikale Schnittlinien in einem Abstand (D) vom Mittelpunkt der zugehörigen Tanköffnungen (5f, r) zur mittleren Tanköffnung (5m) hin versetzt verlaufen, so dass über in den Tanköffnungen (5f, m, r) angeordnete Sprühköpfe alle Schwallwand- und Tankwandbereiche benetzbar sind.

## Revendications

1. Conteneur-citerne à système (3f, m, r) de cloisons anti-vagues comportant, disposés transversalement par rapport à un axe longitudinal (12) d'une cuve (1) du conteneur-citerne, deux éléments formant cloisons anti-vagues (31, 33, 35) disposés chacun dans un plan principal (11a, b, c) passant par l'intérieur de la citerne et segmentant l'intérieur de la citerne et montés par leurs extrémités (91, 92) sur une coque (2) de citerne définissant l'intérieur (7) de la citerne, dans lequel chaque élément formant cloison anti-vagues (31, 33, 35) est conçu sous la forme d'un élément plat profilé longitudinalement et orienté verticalement dans le sens du profilé et comprenant un bord latéral intérieur libre (37) et un bord latéral extérieur libre (39) dans le sens du profilé,
les bords latéraux intérieurs libres (7) des éléments formant cloisons anti-vagues (31, 33, 35) sont en regard les uns des autres et définissent entre eux un intervalle (21) pour faciliter le nettoyage et l'entretien, **caractérisé en ce que**
un passage (23) est ménagé entre chaque bord latéral extérieur libre (39) et la coque latérale de la citerne, et les éléments formant cloisons anti-vagues (31, 35) sont disposés dans deux plans principaux (11a, b) inclinés l'un vers l'autre.

2. Conteneur-citerne selon la revendication 1, dans lequel l'inclinaison des plans (11a, b) l'un vers l'autre est de 130° à 150°, de préférence de 135° à 145°.

3. Conteneur-citerne selon l'une quelconque des revendications 1 et 2, dans lequel l'inclinaison des bords latéraux intérieurs libres (37) par rapport à un plan vertical (13) segmentant l'intérieur (2) de la citerne dans le sens longitudinal (12) de la citerne est de 4° à 8°, de préférence de 5° à 7°, définissant un intervalle vertical à peu près trapézoïdal (21).

4. Conteneur-citerne selon l'une quelconque des revendications 1 à 3, dans lequel une partie formant bord latéral (38) de l'élément formant cloison anti-vagues orienté sur toute sa longueur sur les bords latéraux intérieur libre et/ou extérieur libre (37, 39) a une disposition inclinée par rapport au plan principal (11a, b, c) pour améliorer la stabilité de la structure.

5. Conteneur-citerne selon l'une quelconque des revendications précédentes, dans lequel la superficie des éléments formant cloisons anti-vagues (31, 33, 35) projetée sur une coupe transversale de la citerne est de 40 % à 70 % de la section transversale de la citerne.

6. Conteneur-citerne selon l'une quelconque des revendications précédentes, dans lequel le rapport de la profondeur (T) du profié à la largeur (W) des éléments formant cloisons anti-vagues (31, 33, 35) est de 1/8 à 1/14, de préférence de 1/10 à 1/12.

7. Conteneur-citerne selon l'une quelconque des revendications précédentes, dans lequel les éléments formant cloisons anti-vagues (31, 33, 35) se présentent sous la forme d'éléments formant profilés ondulés trapézoïdaux ou sinueux ou oblongs.

8. Conteneur-citerne selon l'une quelconque des revendications précédentes, dans lequel les éléments formant cloisons anti-vagues (31, 33, 35) sont montés sur la coque (2) de la citerne à l'aide d'éléments intermédiaires (93, 94 ; 94', 94") épousant la forme de celle-ci.

9. Conteneur-citerne selon la revendication 8, dans lequel les éléments intermédiaires (93, 94 : 94', 94") se présentent sous la forme de profilés en bandes, en T, à profil longitudinal ou en oméga.

10. Conteneur-citerne selon l'une quelconque des revendications précédentes, dans lequel le système (3f, m, r) de cloisons anti-vagues est disposé dans la zone d'une ouverture supérieure (5f, m, r) du conteneur-citerne.

11. Conteneur-citerne selon la revendication 10, présentant trois ouvertures supérieures (5f, m, r), dans lequel un système intermédiaire (3m) de cloison anti-vagues comprend des éléments formant cloisons anti-vagues (33) dans un plan transversal passant par le point central d'une ouverture intermédiaire (5m) de la citerne, et les éléments formant cloisons anti-vagues (31, 35) respectivement de systèmes avant et arrière (3f, 3r) de cloisons anti-vagues sont orientés chacun dans des plans (11a, b) inclinés l'un vers l'autre, dont les axes verticaux sont orientés à une certaine distance (D) du point central des ouvertures correspondantes (5f, r) de la citerne jusqu'à l'ouverture intermédiaire (5m) de la citerne qui se situe dans les limite d'une largeur (W) des éléments formant cloisons anti-vagues afin que la totalité des éléments formants cloisons anti-vagues et des parties de la coque de la citerne puissent être mouillés par des têtes de pulvérisation disposées dans les ouvertures (5f, m, r) de la citerne.
